# FASCICULE DE BREVET EUROPEEN

(11) **EP 0 836 703 B1**
(45) Date de publication et mention de la délivrance du brevet: **11.09.2002**
(21) Numéro de dépôt: 96924922.6
(22) Date de dépôt: 02.07.1996
(51) Int. Cl.: G01F 15/06, G01D 3/08

(54) **ENCODEUR IMPULSIONNEL POUR APPAREIL DE DISTRIBUTION DE LIQUIDE**
IMPULSKODIEREINRICHTUNG FÜR EIN FLÜSSIGKEITSABGABEGERÄT
PULSE ENCODER FOR A LIQUID DISPENSING APPARATUS

(30) Priorité: 04.07.1995 FR 9508164
(43) Date de publication de la demande: 22.04.1998
(73) Titulaire: TOKHEIM SERVICES FRANCE, 92350 Le Plessis Robinson (FR)
(72) Inventeur: NITECKI, Jean-Pierre, F-78530 Buc (FR)
(74) Mandataire: Cabinet HERRBURGER
(86) Numéro de dépôt international: FR9601030
(87) Numéro de publication internationale: WO97002473

(56) Documents cités:
- EP-A- 0 049 919
- EP-A- 0 087 536
- DE-A- 3 434 608
- FR-A- 2 155 303
- FR-A- 2 205 782
- GB-A- 2 005 449

## Description

La présente invention concerne un encodeur impulsionnel destiné à équiper un compteur d'un appareil de distribution de liquide dans le but de fournir un signal représentatif de l'écoulement du liquide délivré.

L'invention trouve une application particulièrement avantageuse dans le domaine de la distribution de carburant.

Dans la suite de ce mémoire, on désignera indifféremment sous le terme général de "compteur" aussi bien les compteurs de volume que les compteurs de débit, étant entendu que dans le premier cas le signal représentatif de l'écoulement du liquide délivré est un signal de volume permettant de calculer le volume de liquide distribué par sommation d'impulsions, tandis que dans le deuxième cas ledit signal représentatif de l'écoulement du liquide délivré est un signal de débit permettant de calculer le volume de liquide distribué par intégration d'une fréquence d'impulsions.

A titre d'exemple, les volucompteurs d'une station de distribution de carburant comprennent habituellement une pompe permettant d'amener ledit carburant d'une cuve jusqu'au lieu de livraison, ici le réservoir d'un véhicule, en passant par un compteur de volume, appelé aussi mesureur, dont la fonction est, de façon tout à fait générale, de produire à partir de l'écoulement du carburant un mouvement de rotation dont une rotation complète correspond à un volume donné connu de carburant traversant le compteur.

Un système d'encodage couplé audit mouvement de rotation forme avec le compteur de volume un dispositif de mesure apte à fournir un signal représentatif de l'écoulement en volume du carburant délivré, lequel signal est traité par un calculateur prévu pour sommer le signal de volume reçu du système d'encodage de manière à pouvoir établir le volume de carburant délivré par le volucompteur concerné, ainsi que le montant à payer compte tenu du prix au litre du carburant.

Ces informations sont ensuite visualisées à destination du client sur un afficheur incorporé au volucompteur correspondant.

Les systèmes d'encodage le plus souvent utilisés sont des encodeurs impulsionnels aptes à fournir un signal électrique constitué d'une série d'impulsions dont chacune correspond au pas volumétrique de mesure du volume de carburant délivré, 1 cl par exemple.

Dans son principe, un encodeur impulsionnel comprend une roue d'encodage mécaniquement couplée au compteur, et donc entraînée par ce dernier à une vitesse de rotation sensiblement proportionnelle au débit de liquide. Ladite roue d'encodage porte, à sa périphérie par exemple, une série de divisions qui, dans un mode de réalisation particulier, peuvent être de simple fentes de période angulaire P correspondant audit pas volumétrique de mesure.

Un capteur unique, tel qu'un capteur optique, disposé de manière à pouvoir détecter le défilement desdites fentes fournit lors du mouvement de rotation de la roue d'encodage un signal impulsionnel représentatif de l'écoulement en volume du liquide délivré.

Ce signal est envoyé au calculateur qui établit alors le volume de liquide distribué en multipliant le nombre total d'impulsions reçues par le pas volumétrique.

Toutefois, ce type d'encodeur impulsionnel connu présente plusieurs inconvénients.

Tout d'abord, il ne permet pas de définir le sens de rotation du compteur de débit. Il n'est donc pas possible de détecter une inversion du sens de rotation due par exemple à des à-coups hydrauliques, ce qui a pour conséquence que l'encodeur délivre alors des impulsions même lors de la rotation inverse de la roue d'encodage alors qu'aucun volume de liquide ne circule. Or, ces impulsions parasites étant comptabilisées par le calculateur avec les autres, il en résulte une surestimation du volume de liquide délivré.

D'autre part, il peut se produire au cours d'oscillations de faible amplitude du compteur que le niveau du signal fourni par le capteur soit constant, à savoir niveau haut si le capteur reste en face d'une fente ou niveau bas si le capteur reste en face d'une plage séparant deux fentes consécutives. Mais, un niveau bas pouvant également être dû à une panne du capteur lui-même, il n'est pas possible avec ce type d'encodeur de distinguer entre le phénomène de petites oscillations et la mise hors-service du capteur. Or, il est impératif de pouvoir diagnostiquer à tout moment une panne de capteur.

Pour remédier à ces inconvénients, il a été proposé d'adjoindre au capteur déjà existant un deuxième capteur également apte à détecter les mêmes divisions de la roue d'encodage que le premier capteur, mais décalé d'un quart de période angulaire P/4, modulo P. On peut montrer que dans ce cas la comparaison des deux signaux impulsionnels fournis par les deux capteurs permet de définir le sens de rotation de la roue et donc d'éliminer l'influence des oscillations de grande amplitude. Cependant, même avec la présence de ces deux capteurs, il n'est pas possible de détecter à coup sur une panne d'un capteur car les signaux fournis dans ce cas peuvent se confondre avec ceux obtenus dans certains cas de petites oscillations.

Afin de lever toute ambiguïté dans l'interprétation des signaux, on peut, par exemple, percer la roue d'encodage d'un trou et lui associer un troisième capteur. Dans cette configuration, la mise hors service d'un des capteurs peut être diagnostiquée en toute certitude. Toutefois, ce diagnostic n'intervient qu'après un tour de la roue d'encodage, c'est-à-dire après un délai considéré comme trop tardif.

Aussi, le problème technique à résoudre par l'objet de la présente invention est de proposer un encodeur impulsionnel destiné à équiper un compteur d'un appareil de distribution de liquide dans le but de fournir un signal représentatif de l'écoulement du liquide délivré, ledit encodeur comprenant :
- une roue d'encodage entraînée par ledit compteur à une vitesse de rotation sensiblement proportionnelle au débit de liquide, ladite roue portant une première série de divisions, dites primaires, de période angulaire P,
- deux capteurs primaires aptes à détecter lesdites divisions primaires et décalés angulairement l'un par rapport à l'autre d'un quart de période angulaire P/4, modulo P, de manière à fournir deux signaux impulsionnels primaires également décalés d'un quart de période,
encodeur qui permettrait d'obtenir une détection beaucoup plus précoce de la mise hors-service de l'un des capteurs.

La solution au problème technique posé consiste, selon la présente invention, en ce que :
- ladite roue d'encodage porte également une deuxième série de divisions, dites secondaires, de période angulaire P' égale au double de la période angulaire P des divisions primaires, un capteur secondaire étant apte à détecter lesdites divisions secondaires de manière à fournir un signal impulsionnel secondaire de période double de la période des signaux impulsionnels primaires,
- ledit encodeur comporte des moyens de traitement aptes à fournir ledit signal représentatif de l'écoulement du liquide délivré à partir des signaux impulsionnels primaires et secondaire.

Ainsi, comme on le verra en détail plus loin, l'encodeur impulsionnel de l'invention permet de détecter une panne d'un des capteurs au bout d'une rotation de la roue d'encodage de 2P, période angulaire de la série des divisions secondaires, ce qui peut représenter une détection plus rapide d'un facteur 25 par exemple par rapport à l'encodeur à un trou auxiliaire décrit plus haut.

Selon un premier mode de réalisation, lesdites divisions sont des fentes aménagées le long de deux couronnes concentriques de la roue d'encodage, lesdits capteurs étant des capteurs optiques.

Selon un second mode de réalisation, lesdites divisions sont des paires de pôles magnétiques opposés alternativement disposés le long de deux couronnes concentriques de la roue d'encodage, lesdits capteurs étant des capteurs à effet Hall.

La description qui va suivre en regard des dessins annexés, donnés à titre d'exemples non limitatifs, fera bien comprendre en quoi consiste l'invention et comment elle peut être réalisée.

La figure 1a est une vue de dessus d'un compteur de débit équipé d'un encodeur impulsionnel conforme à l'invention.

La figure 1b est une vue en coupe selon la ligne C-C de la figure 1a.

La figure 2a est une vue de dessus d'une roue d'encodage à pôles magnétiques et des capteurs à effet Hall associés .

La figure 2b est une vue de dessus d'une roue d'encodage à fentes et des capteurs optiques associés.

Les figures 3a, 3b et 3c sont des chronogrammes des signaux impulsionnels délivrés par les capteurs de l'encodeur de la figure 2a.

La figure 4a est un chronogramme des signaux impulsionnels délivrés par les capteurs de l'encodeur de la figure 2b.

La figure 4b est un chronogramme montrant les signaux impulsionnels primaires de la figure 4a après mise en forme.

La figure 5 est un bloc-diagramme des moyens de traitement des signaux impulsionnels de la figure 3a.

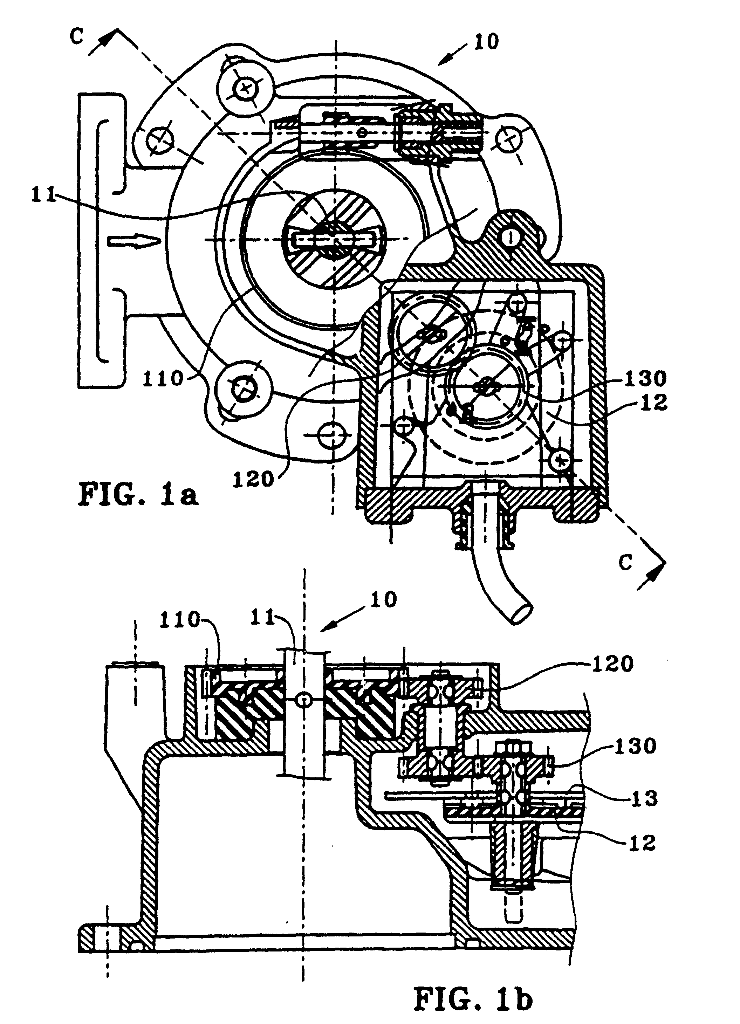

Les figures 1a et 1b montrent en vue de dessus et en coupe un compteur 10 de volume par exemple, d'un appareil de distribution de liquide, tel que du carburant, dont la fonction est de fournir un signal représentatif de l'écoulement en volume du liquide délivré. Un calculateur, non représenté mais de type connu, reçoit ce signal et le traite de façon appropriée pour déterminer le volume total de liquide distribué avec la précision et la sécurité imposées par les normes en vigueur.

Le compteur 10 de volume des figures 1a et 1b est constitué d'un organe tel qu'un très classique dispositif à quatre pistons, apte à provoquer la rotation d'un axe 11 selon une vitesse angulaire sensiblement proportionnelle au débit du liquide circulant à travers l'appareil de distribution.

A titre d'exemple, le compteur 10 est réalisé de manière à ce qu'une rotation complète de l'axe 11, soit 360°, corresponde à un volume de liquide délivré de 0,5ℓ.

L'axe 11 du compteur 10 de volume est couplé à un premier pignon 110 d'une boîte de vitesse, lequel entraîne un deuxième pignon 120 dans un rapport 2,5:1. Un troisième pignon 130, dans un rapport 1:1 avec le deuxième pignon 120, est muni d'une roue 12 d'encodage dont la vitesse angulaire est telle qu'une rotation complète de 360° corresponde à un volume de liquide de 0,2ℓ.

Afin d'obtenir un pas volumétrique de mesure du volume de liquide distribué de 1cl par exemple, la roue 12 d'encodage porte une série de 20 divisions dᵢ (i = 1, ..., 20), dites divisions primaires, de période P égale à 360°/20 = 18°.

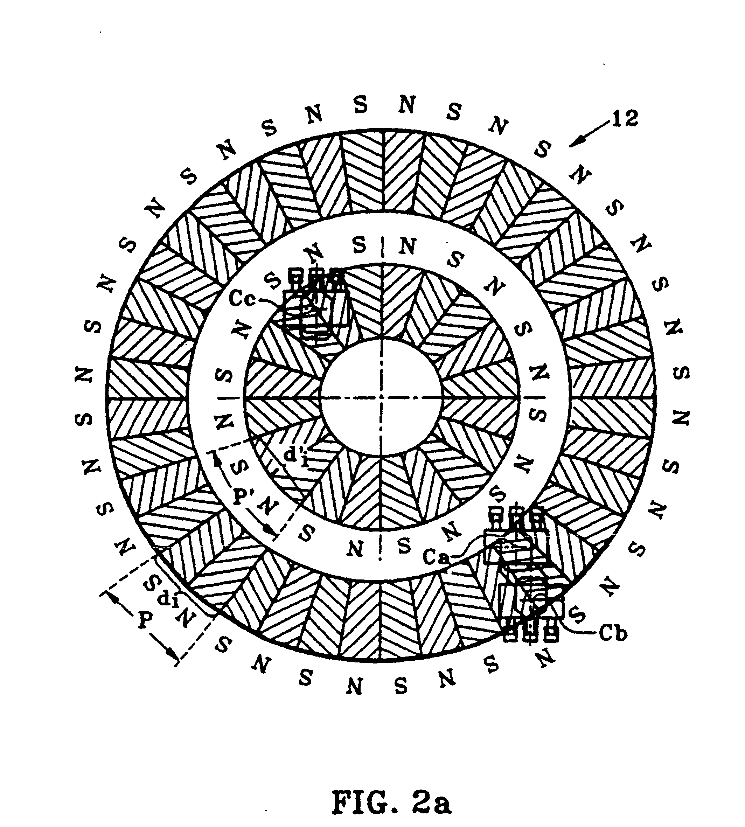

Dans le mode de réalisation de la figure 2a, lesdites divisions primaires dᵢ sont formées de 20 paires de pôles magnétiques opposés N et S alternativement disposés le long d'une couronne extérieure de la roue 12. La largeur angulaire d'un pôle magnétique N ou S est donc de 9° d'arc.

Le roue 12 d'encodage peut être de la polyamide PAS/6 moulée chargée de poudre magnétique, Flexam P par exemple, la magnétisation des pôles magnétiques étant réalisée pendant le moulage selon une technique de fabrication connue, notamment pour ses applications dans le domaine de l'automobile.

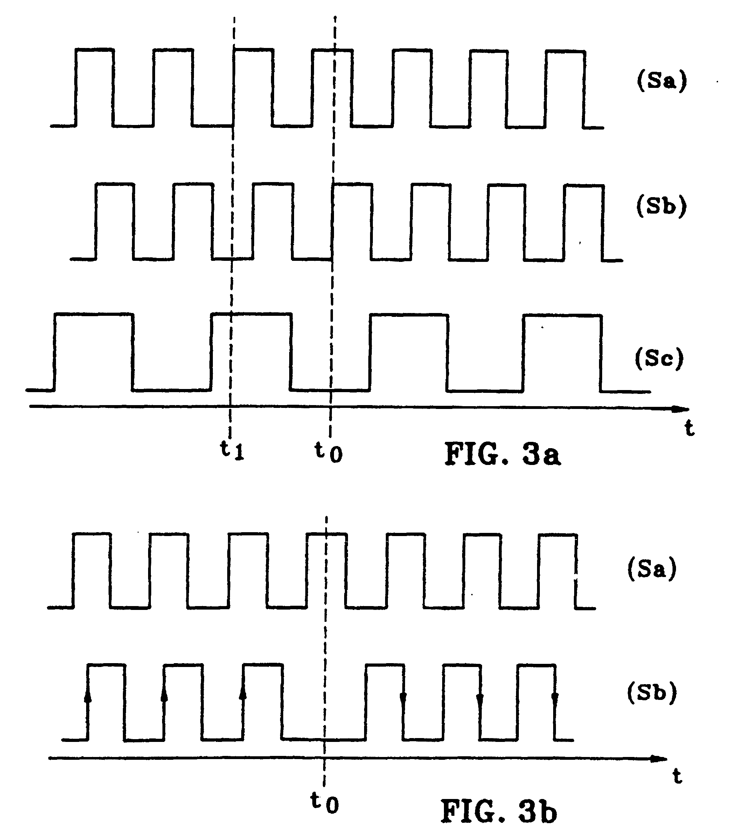

Deux capteurs Ca, Cb, dits capteurs primaires, du type à effet Hall sont placés en regard de la couronne extérieure des divisions primaires dᵢ sur un support fixe 13 que l'on peut voir sur la figure 1b. Comme l'indique la figure 2a, les capteurs Ca et Cb sont décalés d'un quart de période angulaire, soit P/4 = 4,5° dans l'exemple choisi. Ainsi, lors de la rotation de la roue 12 d'encodage, les capteurs Ca et Cb sont capables de détecter les transitions d'une polarité magnétique à l'autre et délivrent des signaux impulsionnels respectifs Sa, Sb qui, ainsi que le montre la figure 3a, sont décalés d'un quart de période.

Bien entendu, à partir de leur position immédiatement consécutive de la figure 2a, les capteurs primaires Ca et Cb pourraient être translatés l'un par rapport à l'autre d'un nombre -entier de périodes angulaires P.

Les signaux Sa, Sb respectivement délivrés par les capteurs Ca, Cb en fonctionnement normal de l'encodeur impulsionnel, objet de l'invention, sont montrés sur la figure 3a.

On a représenté sur la figure 3b la modification de ces signaux à la suite d'une inversion du sens de rotation de la roue 12 d'encodage se produisant lors d'oscillations de grande amplitude de l'axe 11 du compteur 10 de débit. Il apparaît clairement sur la figure 3b qu'une inversion de mouvement à l'instant to se traduit par une inversion de la phase de signaux Sa, Sb, ou encore un déphasage d'une période. On peut observer en particulier que le front montant du signal Sb apparaît lorsque le signal Sa est haut, par exemple, avant inversion de sens, alors qu'après inversion, il apparaît lorsque le signal Sb est bas. Il est donc possible, par simple comparaison des seuls signaux Sa, Sb, de détecter une inversion du sens de rotation du compteur de débit et d'en tenir compte, comme on le verra plus loin, dans l'élaboration du signal final délivré au calculateur pour mesure du volume de liquide délivré.

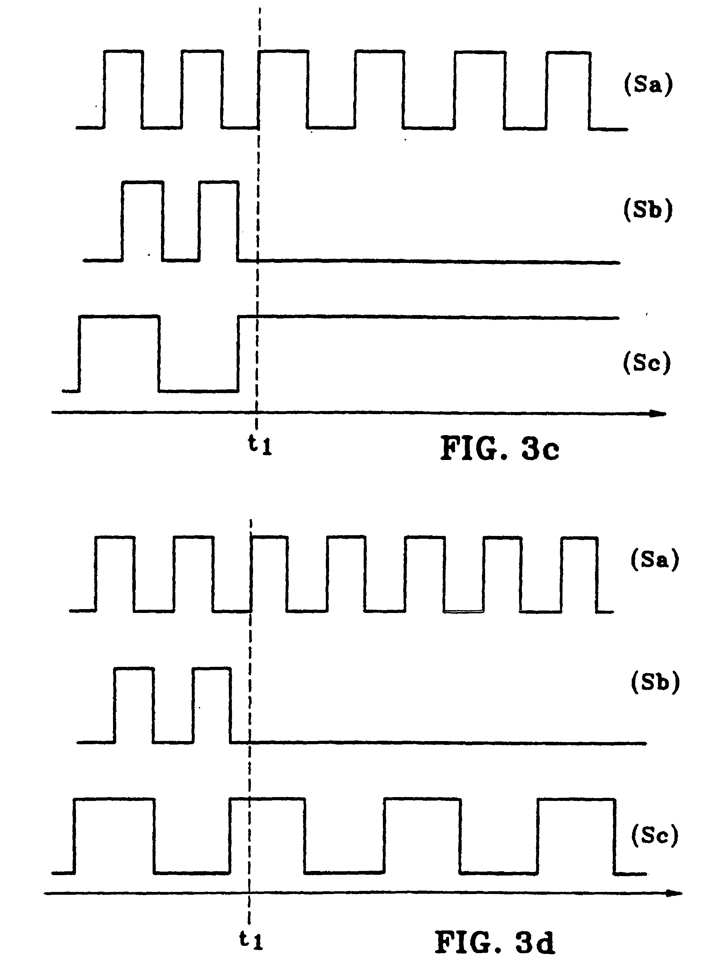

Sur la figure 3c sont représentés les signaux primaires Sa et Sb fournis par les capteurs Ca et Cb, lorsqu'un régime d'oscillations de faible amplitude s'établit à partir d'un instant t₁. On voit que le signal Sa garde l'allure générale d'un signal représentatif d'une rotation normale de la roue 12 d'encodage tandis que le signal Sb reste à un niveau constant, bas dans l'exemple donné, l'amplitude des oscillations étant insuffisante pour faire apparaître des transitions N-S.

De même, la figure 3d montre les mêmes signaux Sa, Sb lors d'une mise hors service du capteur primaire Sb à l'instant t₁. Bien entendu, le signal Sa reste inchangé par rapport à celui dela figure 3a, alors que Sb est à un niveau constant, bas dans l'exemple donné.

Il apparaît donc clairement sur ces exemples qu'il peut être très difficile de distinguer le cas d'oscillations de faible amplitude de celui d'une panne d'un des capteurs.

C'est pour remédier à cette difficulté que la roue 12 d'encodage de l'encodeur impulsionnel de l'invention est pourvue, comme le montre la figure 2a, d'une deuxième série de divisions d'ᵢ, dites divisions secondaires, de période angulaire P' égale au double 2P, soit 36°, de la période angulaire des divisions primaires dᵢ. Ces divisions secondaires d'ᵢ sont formées, comme les divisions primaires dᵢ, par des paires de pôles magnétiques opposés N, S alternativement disposés le long d'une couronne concentrique intérieure de la roue 12 d'encodage. Il y a donc, dans l'exemple de réalisation choisi, 10 paires de pôles, la largeur angulaire d'une division primaire d'ᵢ étant de 36° et celle d'un pôle de 18°.

Un capteur secondaire Cc, également à effet Hall, placé en regard de la couronne intérieure des divisions secondaires, délivre un signal impulsionnel secondaire Sc, représenté sur la figure 3a, de période double de celle des signaux impulsionnels primaires Sa et Sb.

On comprend sur les figures 3c et 3d que l'examen de l'évolution du signal secondaire Sc permet de savoir si un niveau constant, bas par exemple, d'un capteur primaire, le capteur Cb en l'occurence, est dû à des petites oscillations de la roue 12 d'encodage ou à une panne dudit capteur primaire. En effet, un régime d'oscillations de faible amplitude donnera lieu à un niveau constant, haut par exemple, du signal secondaire Sc, tandis qu'une panne d'un détecteur primaire sera sans effet sur le comportement du capteur secondaire qui continuera à fonctionner normalement.

Le diagnostic concernant l'état d'un capteur primaire peut donc être fait en toute sécurité au bout d'une période P' des divisions secondaires, soit 36° dans le cas présent.

On notera que le système d'encodage ainsi consitué permet également de détecter la mise hors service du capteur Cc ou de deux capteurs quelconques parmi les trois.

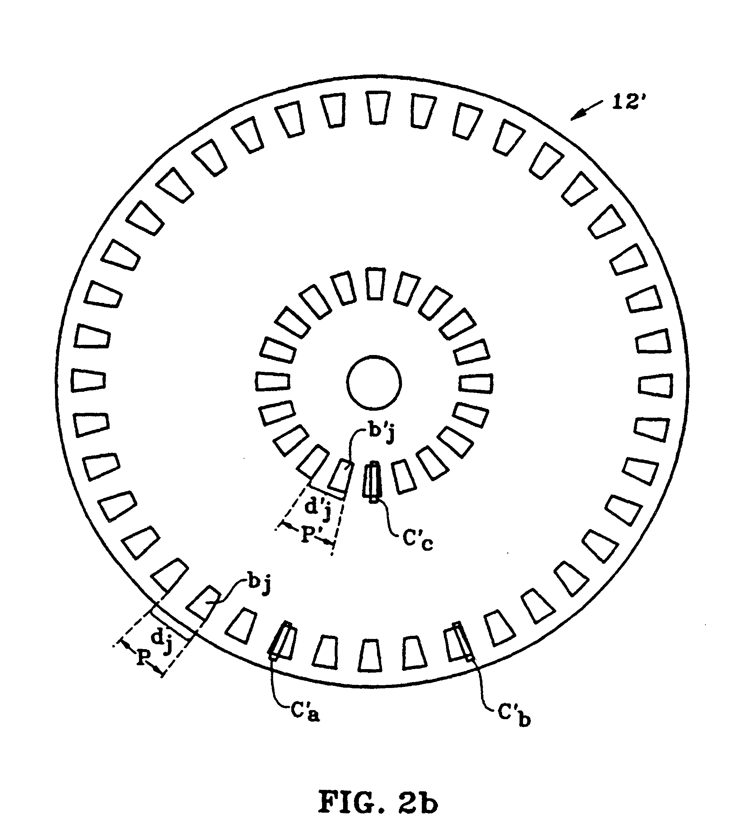

Sur la figure 2b est montrée une variante de réalisation de la roue d'encodage de l'encodeur impulsionnel conforme à l'invention.

Selon cette variante, la roue 12' d'encodage comporte, d'une part, des divisions primaires dⱼ de pas P définies par des fentes fⱼ aménagées le long d'une couronne extérieure de la roue 12', et, d'autre part, des divisions secondaires d'ⱼ de pas P' = 2P définies par des fentes fⱼ aménagées le long d'une couronne intérieure, concentrique à la couronne extérieure desdites divisions primaires.

Deux capteurs optiques primaires C'a, C'b sont disposés en regard des divisions primaires dj de manière à être décalés l'un par rapport à l'autre d'un quart de période P/4, modulo P. On notera la forme rectangulaire allongée dans le sens radial des capteurs Ca', C'b, cette forme étant obtenue en plaçant lesdits capteurs derrière des fentes fixes, dites fentes de phase.

De la même manière, un capteur optique secondaire C'c, analogue aux capteurs primaires, est disposé en regard des divisions secondaires d'ⱼ, sans qu'une relation de phase particulière avec les capteurs primaires ne soit nécessaire.

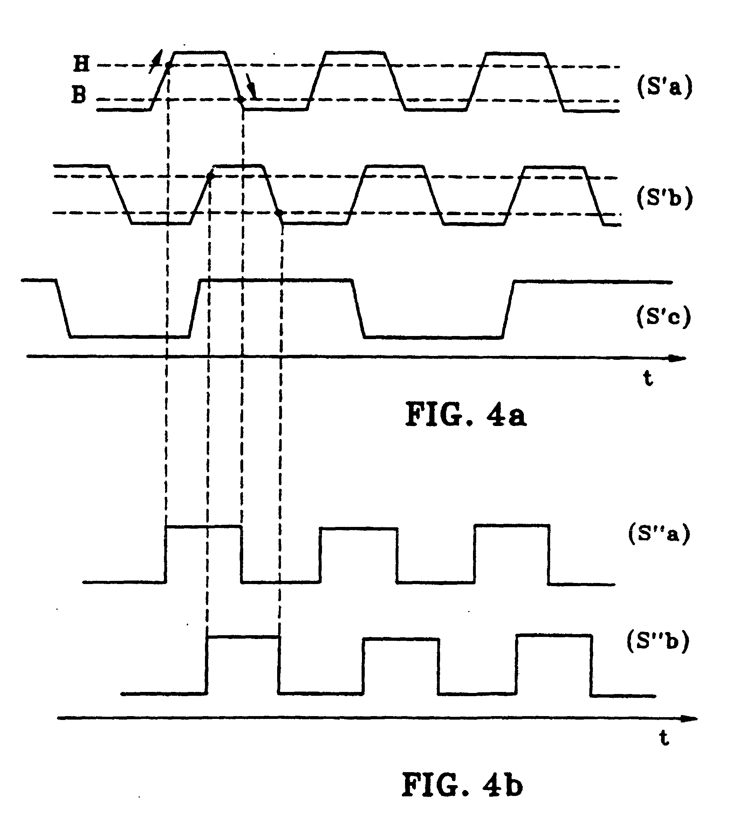

Il convient de remarquer la forme trapézoïdale donnée aux fentes primaires fⱼ, laquelle a pour conséquence, lors de la rotation de la roue 12' d'encodage, de fournir des signaux primaires S'a et S'b également de forme trapézoïdale comme représenté sur la figure 4a. Il en est de même pour le signal secondaire S'c.

L'avantage de réaliser des signaux primaires S'ₐ, S'_{b} trapézoïdaux est le suivant.

En sortie des capteurs primaires C'ₐ, C'_{c}, les signaux primaires S'ₐ, S'_{b} sont mis en forme par déclenchement d'une gâchette électronique à partir d'un seuil haut H sur le front montant de l'impulsion et par retour à zéro à partir d'un seuil bas B sur le front descendant. On obtient alors les signaux impulsionnels rectangulaires S"ₐ, S"_{b} de la figure 4b.

On comprend alors que de petites vibrations mécaniques autour du point de déclenchement haut H par exemple ne seraient pas perçues par l'encodeur du fait que le niveau des signaux primaires S"ₐ, S"_{b} mis en forme resterait à un niveau constant, haut dans l'exemple considéré, sans qu'un retour au niveau bas ne soit possible puisqu'un tel retour exige la traversée du point de déclenchement bas B.

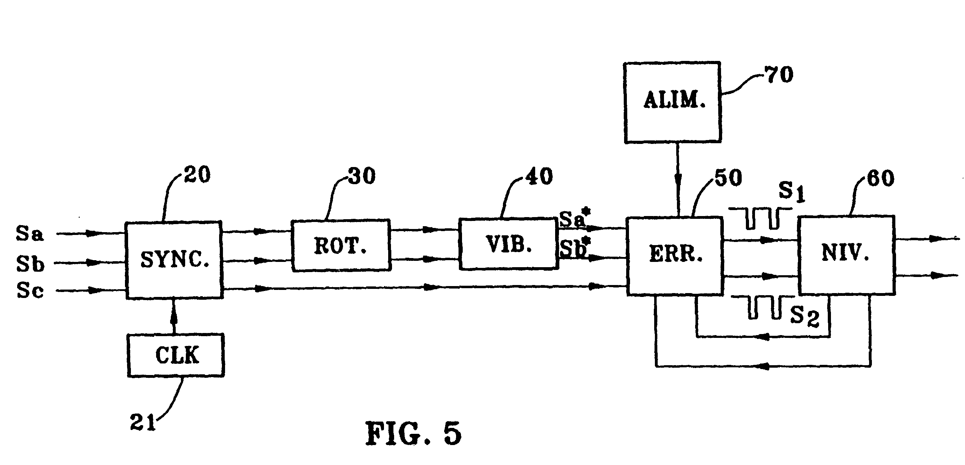

Le traitement des signaux impulsionnels Sₐ, S_{b} et S_{c} de la figure 3a, par exemple, va maintenant être expliqué en regard de la figure 5.

Conformément à la figure précitée, les trois signaux Sₐ, S_{b}, S_{c} provenant des capteurs Cₐ, C_{b}, C_{c} de la roue 12 d'encodage sont d'abord synchronisés à l'aide d'une bascule électronique 20 commandée par une horloge 21.

Puis, les signaux primaires Sₐ, S_{b} synchronisés sont appliqués successivement à un détecteur 30 de sens de rotation du compteur et à un détecteur 40 de vibrations, dans le but d'éliminer desdits signaux les impulsions parasites qui seraient dues à une inversion de sens de rotation et aux vibrations, comme cela a été expliqué plus haut. Les signaux S*ₐ et S*_{b}, qui en résultent, identiques mais décalés d'un quart de période, ne contiennent alors en principe que des impulsions représentatives de l'écoulement du liquide délivré.

Les signaux S*ₐ et S*_{b} ainsi que le signal secondaire S_{c} sont traités par un bloc 50 de détection d'erreur qui a pour but de détecter que l'un ou deux des trois capteurs est hors service. Si aucune panne n'est détectée, le bloc 50 délivre en sortie deux signaux S₁, S₂ qui sont les signaux S*ₐ, S*_{b} mis en forme pour pouvoir être transmis et lus par le calculateur.

Les signaux S₁, S₂ sont normalement à un niveau haut, les impulsions étant représentées par des niveaux bas, non simultanés sur chacun des deux canaux

Si une panne de capteur est mis en évidence par le bloc 50 de détection d'erreur, les signaux S₁ et S₂ sont forcés à un niveau bas pour prise en compte par le calculateur et arrêt de la distribution.

On peut remarquer sur la figure 5 que l'alimentation de la chaîne de traitement est également contrôlée par le bloc 50 de détection d'erreur. Si l'alimentation n'est pas présente, les signaux S₁ et S₂ sont forcés à un niveau bas, avec les mêmes effets qu'en cas de panne d'un capteur.

Enfin, il faut signaler la présence d'un contrôleur 60 de niveau placé en sortie de bloc 50 de détection d'erreur, dont la fonction est de détecter par corrélation avec les signaux Sₐ*, S_{b}* l'existence de courts-circuits sur la ligne de transmission des signaux au calculateur, ces courts-circuits pouvant être dus à des défauts de câblage ou à la fraude.

## Revendications

1. Encodeur impulsionnel destiné à équiper un compteur (10) d'un appareil de distribution de liquide dans le but de fournir un signal représentatif de l'écoulement du liquide délivré, ledit encodeur comprenant :
- une roue (12 ; 12') d'encodage entraînée par ledit compteur (10) à une vitesse de rotation sensiblement proportionnelle au débit de liquide, ladite roue (12 ; 12') portant une première série de divisions (dᵢ; dⱼ), dites primaires, de période angulaire P,
- deux capteurs primaires (Cₐ, C_{b} ; C'ₐ, C'_{b}) aptes à détecter lesdites divisions primaires (dᵢ ; dⱼ) et décalés angulairement l'un par rapport à l'autre d'un quart de période angulaire P/4, modulo P, de manière à fournir deux signaux impulsionnels primaires (Sₐ, S_{b} ; S'ₐ, S'_{b}) également décalés d'un quart de période,
**caractérisé en ce que** :
- ladite roue (12 ; 12') d'encodage porte également une deuxième série de divisions (d'ᵢ ; d'ⱼ), dites secondaires, de période angulaire P' égale au double de la période angulaire P des divisions primaires (dᵢ ; dⱼ), un capteur secondaire (C_{c} ; C'_{c}) étant apte à détecter lesdites divisions secondaires (d'ᵢ ; d'ⱼ) de manière à fournir un signal impulsionnel secondaire (S_{c} ; S'_{c}) de période double de la période des signaux impulsionnels primaires (Sₐ, S_{b} ; S'ₐ, S'_{b}),
- ledit encodeur comporte des moyens de traitement aptes à fournir ledit signal représentatif d'écoulement du liquide délivré à partir des signaux impulsionnels primaires et secondaire.

2. Encodeur selon la revendication 1, **caractérisé en ce que** lesdites divisions (dᵢ, d'ᵢ ; dⱼ, d'ⱼ) sont des fentes (fⱼ, fⱼ) aménagées le long de deux couronnes concentriques de la roue (12') d'encodage, lesdits capteurs (C'ₐ, C'_{b}, C'_{c}) étant des capteurs optiques.

3. Encodeur selon la revendication 2, **caractérisé en ce que** lesdites divisions primaires sont des fentes trapézoïdales (fⱼ).

4. Encodeur selon la revendication 1, **caractérisé en ce que** lesdites divisions (dᵢ, d'ᵢ) sont des paires de pôles magnétiques opposés (N, S) alternativement disposés le long de deux couronnes concentriques de la roue (12) d'encodage, lesdits capteurs (Cₐ, C_{b}, C_{c}) étant des capteurs à effet Hall.

## Patentansprüche

1. Impulscodiereinrichtung zum Ausrüsten eines Zählers (10) eines Flüssigkeitsabgabegerätes, mit dem Ziel, ein die Strömung der abgegebenen Flüssigkeit darstellendes Signal zu liefern, wobei die Codiereinrichtung folgendes umfasst:
- Ein Codierrad (12; 12'), welches durch den genannten Zähler (10) mit einer im Wesentlichen zum Flüssigkeitsdurchfluss proportionalen Drehgeschwindigkeit angetrieben wird, wobei das Rad (12, 12') eine erste Reihe von Abschnitten (dᵢ, dⱼ), sogenannten Primärabschnitten, mit einer Winkelperiode P trägt,
- zwei Primärfühler (Cₐ, C_{b}; C'ₐ, C'_{b}), die geeignet sind, die genannten Primärabschnitte (dᵢ, dⱼ) zu erfassen und die um eine Vertelwinkelperiode P/4, Modulo P, derart winkelig zueinander versetzt sind, dass sie zwei ebenfalls um eine Viertelperiode versetzte Primärimpulssignale (Sₐ, S_{b}; S'ₐ, S'_{b}) liefern,
**dadurch gekennzeichnet, dass:**
- das genannte Codierrad (12; 12') auch eine zweite Reihe von Abschnitten (d'ᵢ, d'ⱼ), sogenannten Sekundärabschnitten, trägt, mit einer Winkelperiode P', die doppelt so groß ist wie die Winkelperiode P der Primärabschnitte (dᵢ, dⱼ), wobei ein Sekundärfühler (C_{c}; C'_{c}) geeignet ist, die genannten Sekundärabschnitte (d'ᵢ, d'ⱼ) derart zu erfassen, dass er ein Sekundärimpulssignal (S_{c}; S'_{c}) mit einer Periode liefert, welche das Zweifache der Periode der Primärimpulssignale (Sₐ, S_{b}; S'ₐ, S'_{b}) beträgt,
- die genannte Codiereinrichtung Verarbeitungsmittel enthält, welche geeignet sind, das die Strömung der abgegebenen Flüssigkeit darstellende Signal ausgehend von den Primär- und Sekundärimpulssignalen zu liefern.

2. Codiereinrichtung nach Anspruch 1, **dadurch gekennzeichnet, dass** die genannten Abschnitte (dᵢ, d'ᵢ; dⱼ, d'ⱼ) Schlitze (fⱼ, fⱼ) sind, welche entlang zweier konzentrischer Kränze des Codierrades (12') angeordnet sind, wobei die genannten Fühler (C'ₐ, C'_{b}, C'_{c}) optische Fühler sind.

3. Codiereinrichtung nach Anspruch 2, **dadurch gekennzeichnet, dass** die genannten Primärabschnitte trapezförmige Schlitze (fⱼ) sind.

4. Codiereinrichtung nach Anspruch 1, **dadurch gekennzeichnet, dass** die genannten Abschnitte (dᵢ, d'ᵢ) Paare entgegengesetzter Magnetpole (N, S) sind, welche abwechselnd entlang zweier konzentrischer Kränze des Codierrades (12) angeordnet sind, wobei die genannten Fühler (Cₐ, C_{b}, C_{c}) Halleffektfühler sind.

## Claims

1. Pulse encoder designed to co-operate with a counter (10) in a liquid dispensing system with a view to supplying a signal representative of the flow of liquid dispensed, said encoder comprising:
- a coding dial (12; 12') driven by said counter (10) at a rotation speed substantially proportional to the liquid flow rate, said dial (12; 12') being provided with a first series of divisions (dᵢ ; dⱼ) or primary divisions, at an angular period P,
- two primary sensors (Cₐ, C_{b} ; C'ₐ, C'_{b}) designed to detect said primary divisions (dᵢ; dⱼ) and offset from one another by a quarter of an angular period P/4, modulo P, so as to supply two primary pulse signals (Sₐ, S_{b}; S'ₐ, S'_{b}), also offset by a quarter period,
**characterised in that**:
- said coding dial (12; 12') is also provided with a second series of divisions (dᵢ ; dⱼ) or secondary divisions, at an angular period P' equal to double the angular period P of the primary divisions (dᵢ; dⱼ), a secondary sensor (C_{c} ; C'_{c}) being designed to detect said secondary divisions (d' ᵢ; d'ⱼ) so as to supply a secondary pulse signal (S_{c} ; S'_{c}) at a period double the period of the primary pulse signals (Sₐ, S_{b}; S'ₐ, S'_{b}),
- said encoder has processing means, capable of supplying said signal representative of the flow of dispensed liquid on the basis of the primary and secondary pulse signals.

2. Encoder as claimed in claim 1, **characterised in that** said divisions (dᵢ, d'ᵢ ; dⱼ, d'ⱼ) are slots (fⱼ, f'ⱼ) disposed around two concentric rings of the coding dial (12') and said sensors (C'ₐ, C'_{b}, C'_{c}) are optical sensors.

3. Encoder as claimed in claim 2, **characterised in that** said primary divisions are trapezoidal slots (fⱼ).

4. Encoder as claimed in claim 1, **characterised in that** said divisions (dᵢ, d'ᵢ) are pairs of opposite magnetic poles (N, S) alternately disposed around two concentric rings of the coding dial (12) and said sensors (Cₐ, C_{b}, C_{c}) are Hall effect sensors.
